Europäisches Patentamt

European Patent Office

Office européen des brevets

(11) Veröffentlichungsnummer: **0 278 328 B1**

# EUROPÄISCHE PATENTSCHRIFT

(45) Veröffentlichungstag der Patentschrift:
22.08.90

(21) Anmeldenummer: 88101188.6

(22) Anmeldetag: 27.01.88

(51) Int. Cl.⁵: **B09B 5/00**, B03C 1/00, B03C 1/10, C22B 1/00

(54) Verfahren zur Extraktion von Schwermetallen aus belasteten Böden und Vorrichtung zur Gegenstrom-Extraktion bei einem solchen Verfahren.

(30) Priorität: 07.02.87 DE 3703777
14.03.87 DE 3708395
18.12.87 DE 3743130

(43) Veröffentlichungstag der Anmeldung:
17.08.88 Patentblatt 88/33

(45) Bekanntmachung des Hinweises auf die Patenterteilung:
22.08.90 Patentblatt 90/34

(84) Benannte Vertragsstaaten:
AT BE CH DE ES FR GB IT LI LU NL

(56) Entgegenhaltungen:
EP-A- 0 072 885
FR-A- 1 129 352
GB-A- 859 516
GB-A- 1 007 774
GB-A- 1 594 216
GB-A- 2 151 950
US-A- 2 884 742

HANDBOEK BODEMSANERINGSTECHNIEKEN, 1983,
Seiten 17,18,150, Staatsuitgeverij, Den Haag, NL

(73) Patentinhaber: Siemens Aktiengesellschaft,
Wittelsbacherplatz 2, D-8000 München 2(DE)

(72) Erfinder: Kokemüller, Detlef, Dipl.-Ing. (FH),
Fröbelstrasse 13, D-8520 Erlangen(DE)
Erfinder: Stuhlmüller, Franz, Dipl.-Ing. (TU), Obere
Büch 4, D-8520 Buckenhof(DE)
Erfinder: Vollmar, Horst-Eckart, Dr., Schwalbenweg 28,
D-8521 Möhrendorf(DE)

ACTORUM AG

## Beschreibung

Die Erfindung bezieht sich auf ein Verfahren zur Extraktion von Schwermetallen aus belasteten Böden, wobei die zu reinigende Erde einer Aufteilung in grob- bis feinkörnige Erdpartikel-Fraktionen unterworfen und die feinkörnige Erdpartikel-Fraktion ein mehrstufige Schwermetall-Extraktionsstation durchläuft, wo sie mit einer Extraktionslösung aus Wasser und Schwermetall lösenden Chemikalien durchtränkt wird, die behandelte Erdpartikel·Fraktion gespült und ausgetragen und die Extraktionslösung nach mehrmaliger Verwendung, beladen mit den gelösten Schwermetallen, einer Weiterverarbeitung zugeführt wird.

Ein solches Verfahren ist durch das Handboek Bodemsaneringstechnieken, Staatsuitgeverij, Den Haag, NL, 1983, Seiten 17, 18 und 150, bekannt.

Die Erfindung bezieht sich ferner auf eine Vorrichtung zur Gegenstrom-Extraktion der Schwermetalle aus zu reinigenden, schwermetall-kontaminierten Erden bei einem solchen Verfahren.

Durch Ablagerungen kommunaler oder gewerblicher Abfälle oder durch Immissionen an Industriestandorten sind sogenannte Altlasten entstanden. Häufig ist dabei eine Gefährdung des Grundwassers durch schwermetall-kontaminierte Böden gegeben. Dies wird verstärkt durch eine pH-Wert-Absenkung in den Böden durch saure Niederschläge und der dadurch verstärkten Mobilität der Schwermetalle.

Die Erfassung der Altlasten und die Abschätzung des jeweiligen Cefährdungspotentials stehen noch am Anfang. Die Techniken und Verfahren zur Sanierung der Altlasten sind in den meisten Fällen noch zu entwickeln.

Bisher beschränken sich die Maßnahmen überwiegend auf die Überwachung der Sickerwässer und des Grundwassers. Vereinzelt werden die Ablagerungen, von denen eine akute Gefährdung ausgeht, durch Dichtungswände eingekapselt oder abgeräumt und in Abfallbeseitigungsanlagen entsorgt.

Durch die EP-B1 0 072 885 ist ein Verfahren zur Dekontaminierung von natürlichen und technischen Schlämmen durch Behandlung der Schlämme mit Mineralsäure bekannt, mit den weiteren Schritten: Abtrennung des Feststoffanteils und Ausfällung der im Filtrat gelösten Metalle mittels Calcium-Hydroxid. Im besonderen werden bei diesem Verfahren die in der wässrigen Phase des gebildeten Hydroxid-Niederschlages noch vorhandenen Cadmium-Spuren durch Einleiten von $CO_2$ und damit durch Einbau in das bei der Kohlensäure-Einleitung entstehende Calcium-Karbonat (Calcit) eliminiert. Dieses bekannte Verfahren ist auch beschrieben in der Arbeit von G. Müller und S. Riethmeyer: "Chemische Entgiftung: Das alternative Konzept zur problemlosen und endgültigen Entsorgung schwermetall-belasteter Baggerschlämme", veröffentlicht in "Chemiker-Zeitung, 106. Jahrgang (1982) Nr. 7/8, Seiten 289 bis 292.

Bei diesem bekannten Verfahren sind die besonderen Eigenschaften schwermetall-kontaminierter Böden nicht berücksichtigt.

Die wesentlichen Unterschiede zwischen Schlämmen und Böden sind neben stark unterschiedlichen Partikelgrößenverteilungen die Art des Schadstoffeintrags. Während bei Schlämmen die Schwermetalle überwiegend aus der gelösten Phase sich fein verteilt an die mineralischen und organischen Sedimente anlagern, wurden in die Böden die Schadstoffe direkt über zum Teil wilde Industrieablagerungen oder über Immissionen in Form feinster Stäube eingebracht.

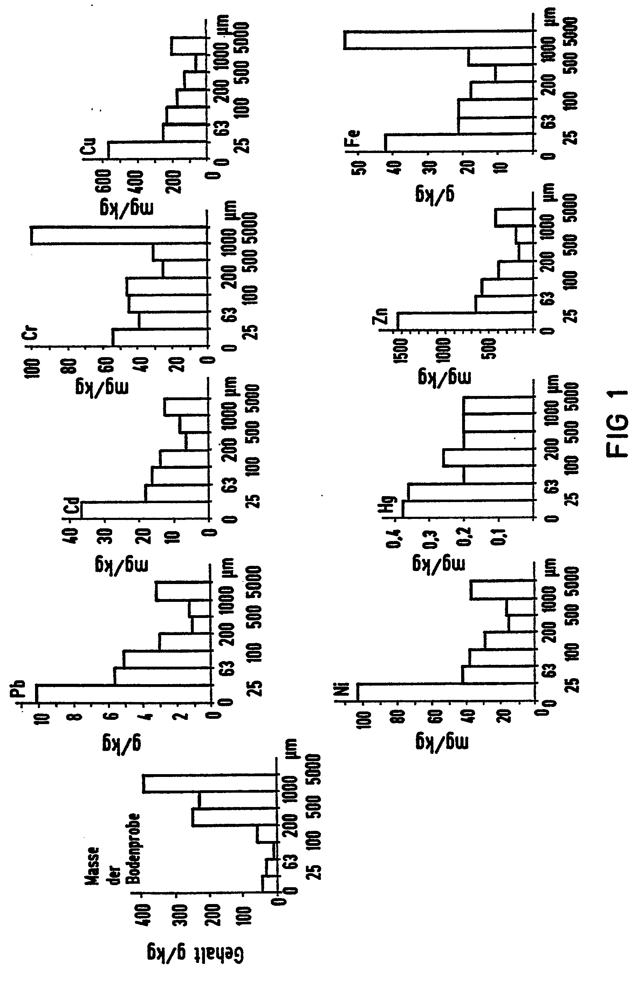

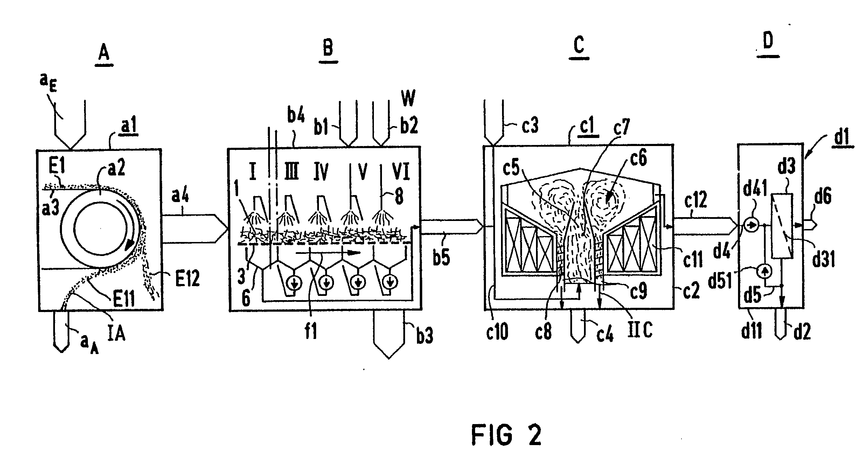

Die Tatsache, daß die Schwermetalle bei Schlämmen auf die Feinstfraktion konzentriert sind, geht beispielsweise hervor aus der Arbeit von J. Werther, H.Träuscher und R. Hilligardt: "Aufstromklassierung und maschinelle Entwässerung des Hamburger Hafenschlicks", veröffentlicht in "Fachseminar Baggergut", Hamburg 1984, Seiten 183 bis 202, ISSN 0177 bis 1191, siehe insbesondere die Darstellung der Abbildungen 1 und 2 auf Seite 185.

Durch die GB-A 859 516 sind ein Verfahren zur nassen Magnetscheidung und eine entsprechende Vorrichtung bekannt.

Ferner ist durch die US-A 2 884 742 eine Maschine zur Bodensanierung bekannt, mit welcher die zu reinigende Erde auf einem porösen Förderband an Sprühdüsen vorbeigeführt wird, die zum einem die Erde mit einem Lösungsmittel durchtränken und zum anderen eine Spülung der Erde, d.h. Entfernung des mit den Ballaststoffen beladenen Lösungsmittels, bewirken.

Der Erfindung liegt die Aufgabe zugrunde, ein gattungsgemäßes Verfahren anzugeben, mit welchem im kontinuierlichen Verfahren eine Intensivreinigung kontaminierter Böden durchgeführt werden kann und durch welches ein kompakter Aufbau der Behandlungsstationen ohne allzu großen Volumenbedarf und ein hoher Reinigungseffekt erreichbar sind.

Erfindungsgemäß wird die gestellte Aufgabe bei einem gattungsgemäßen Verfahren durch die im Kennzeichen des Patentanspruchs 1 angegebenen Merkmale gelöst. Vorteilhafte Ausgestaltungen dieses Verfahrens sind in den Patentansprüchen 2 bis 7 angegeben.

Gegenstand der Erfindung ist auch, wie eingangs angedeutet, eine Vorrichtung zur Gegenstrom-Extraktion der Schwermetalle aus zu reinigenden, schwermetall-kontaminierten Erden gemäß Oberbegriff des Anspruchs 8 zur Durchführung des Verfahrens nach Patentanspruch 1, mit welcher die Aufgabe der möglichst intensiven kontinuierlichen Schwermetall-Extraktion bei sparsamem Säure- und Wasserverbrauch durch die im Kennzeichen des Anspruchs 8 angegebenen Merkmale gelöst wird. Eine vorteilhafte Weiterbildung dieser Vorrichtung nach Anspruch 8 ist im Anspruch 9 angegeben.

Die mit der Erfindung erzielbaren Vorteile sind vor allem darin zu sehen, daß sich, wie weiter unten noch erläutert, bereits labormäßig hohe Reinigungsgrade erzielen lassen, die weit unterhalb der von der Klärschlammverordnung vorgegebenen Werte liegen, und daß sich das neue Verfahren mit seiner Gegenstrom-Extraktionsvorrichtung durch eine hohe Prozeßökonomie, d.h. gute Ausnutzung der einzuspeisenden Säure- und Wassermengen, auszeichnet.

Im folgenden werden das Verfahren nach der Erfindung sowie seine Schwermetall-Extraktionsvorrichtung anhand der Zeichnung noch näher erläutert, in welcher ein Ausführungsbeispiel und zwei Diagramme dargestellt sind. Es zeigt:

FIG 1 ein Diagrammfeld, in welchem anhand von neun kleinen Einzeldiagrammen die Massen- und Schwermetallverteilung für eine Bodenprobe aus Rodgau für Blei, Cadmium, Chrom, Kupfer, Nickel, Quecksilber, Zinn und Eisen (in g/kg bzw. mg/kg auf der Ordinatenachse) in Abhängigkeit von der Partikelgröße (in µm auf der Abszissenachse) aufgetragen sind;

FIG 2 schematisch die vier aufeinander folgenden Verfahrensstufen A "Magnetische Vorreinigung", B "Gegenstrom-Extraktion", C "Hydroxidfällung und Entwässerung mit S/L-Magneten" und schließlich D "Entsalzung mittels umgekehrter Osmose". Es handelt sich dabei also um ein Verfahrensschema der magnetisch-chemischen Schwermetall-Extraktion aus mit Altlasten belasteten Böden;

FIG 3 die Vorrichtung zur Durchführung der Verfahrensstufe B nach FIG 2 vergrößert im Detail sowie im Ausschnitt, und

FIG 4 eine Tabelle aus welcher die Schwermetallgehalte in mg/kg der noch unbehandelten Böden (erste Zeile) und der gereinigten Erde (zweite Zeile) für die Metalle Cadmium, Kupfer, Blei und Zink hervorgehen. Die dritte Zeile zeigt die nach der Klärschlammverordnung zulässigen Werte. Die Tabelle ist eine Grobdarstellung des im Laborversuch erzielten Reinigungserfolges mit dem magnetisch-chemischen Extraktionsverfahren nach der Erfindung. Schließlich zeigen

FIG 5 ein zweite Ausführungsbeispiel für eine Vorrichtung zur magnetischen Entwässerung, welche im Vergleich zu derjenigen nach FIG 2 (Verfahrensstufe C) abgewandelt und vergrößert im Detail dargestellt ist, und

FIG 6 bis 8 ein drittes Ausführungsbeispiel für eine Vorrichtung zur magnetischen Entwässerung im Aufriß, in Draufsicht auf die supraleitenden Dipol-Magnetspulen und in einem Schnitt nach der Schnittebene VIII - VIII aus FIG 6.

Aus dem Diagrammfeld nach FIG 1 erkennt man, daß die aus dem belasteten Boden zu extrahierenden Schwermetalle auf alle Korngrößen des Bodens verteilt sind mit Häufungspunkten bei den Fraktionen 25 µm und 5000 µm im Gegensatz zu den bei Schlämmen gefundenen Konzentrationen bzw. Häufungen der Schadstoffe bei der Feinstfraktion.

Anhand von FIG 2 werden im folgenden die einzelnen Verfahrensstufen A bis D des Verfahrens nach der Erfindung erläutert.

Stufe A:

Magnetische Vorabscheidung des ferro- oder stark paramagnetischen Anteils.

Je nach Verteilung der separierbaren Schadstoffe wird vor der magnetischen Vorreinigung eine Klassierung in günstige Größenfraktionen durchgeführt. Dabei sind die schematisch dargestellten Magnetscheider a1 an die zu behandelnden Korngrößen anzupassen. Die Magnetscheidung wird vorteilhaft naß durchgeführt, da dann eine Trocknung des Bodens entfalls kann, die nachfolgenden Prozeßstufen (B,C,D) ebenfalls naß arbeiten und der erzielbare Trenneffekt insbesondere bei Behandlung der Feinfraktion größer ist. Der Hauptvorteil der magnetischen Vorreinigung ist im reduzierten Säureverbrauch bei der nachfolgenden Extraktion und der damit verbundenen entsprechend geringeren Salzlast im Boden und im Abwasser nach der Anwendung des Gesamtverfahrens zu sehen.

Im einzelnen ist in FIG 2, Teil A, ein Magnetscheider a1 durch eine rechteckige Umrißlinie angedeutet, und zwar handelt es sich um einen Trommelscheider, der z.B. aus Hohlzylindern a2 aufgebaut ist, welche abwechselnd aus Neodym-Eisen-Bor und Weicheisen bestehen. Um die Hohlzylinder a2 ist das Förderband a3 geschlungen, welches nur im Ausschnitt dargestellt ist. Der von oben auf das Förderband gerichtete Zufuhrstutzen $a_E$ dient zur Zuführung der kontaminierten Erde E1, welche durch den Magnetscheider a1 in zwei Fraktionen aufgeteilt wird, das Schwermetallkonzentrat E11, welches zum Abfuhrstutzen $a_A$ gelangt und die andere Fraktion E12, welche man als vorgereinigte Erde bezeichnen kann und welche durch den Transferkanal a4 der zur Durchführung der Verfahrensstufe B dienenden, nachgeschalteten Vorrichtung zugeführt wird. Es ist zweckmäßig eine Klassierung der kontaminierten Erde in mehr als zwei Fraktionen vorzunehmen. Im labormäßigen Maßstab wurden nach Klassierung in drei Fraktionen eine Grobfraktion mit Partikeln größer als 1 mm und die mittlere Fraktion mit Partikeln größer als 0,1 mm sowie kleiner als 1 mm behandelt. Der Reinigungserfolg war dabei erwartungsgemäß beim Eisen am größten. Ausgehend von einem Eisengehalt von etwa 20 g/kg Erde bei der untersuchten Bodenprobe wurde der Eisengehalt in beiden Fraktionen auf etwa 3 g Eisen /kg Erde reduziert. Die Aufkonzentrierung in der Fraktion mit einer Korngröße größer als 1 mm auf etwa 150 g Eisen /kg Erde ist recht gut. In der mittleren Fraktion wurde auf einen Eisengehalt von etwa 40 g Eisen /kg Erde aufkonzentriert.

Zusammenfassend ergibt sich für die Verfahrensstufe A nach FIG 2, daß vor der eigentlichen magnetischen Vorreinigung eine Aufteilung in grob- bis feinkörnige Erdpartikel-Fraktionen vorgenommen und erst dann die Magnetscheidung des ferro- oder stark paramagnetischen Anteils der jeweiligen Fraktion durchgeführt wird, wobei es vorteilhaft ist, die Magnetscheider an die Korngrößen der Erdpartikel-Fraktionen anzupassen.

**Stufe B:**

Schwermetall-Extraktion mittels Mineralsäuren, bevorzugt technischer Salzsäure

Hauptmerkmal dieses Verfahrensschrittes ist das Führen des Säureflusses und der zu reinigen den Erde im Gegenstrom, wobei die Säure zunehmend mit Schwermetallen beladen wird, die im engen Kontakt mit dem Boden diesem entzogen werden. Diese Verfahrensweise ermöglicht eine Minimierung des Wasser- und Säureverbrauchs. Integriert in diese Verfahrensstufe ist auch das Austreiben der Säure mittels Wasser, wobei das Waschwasser mit konzentrierter Säure versetzt in dieser Stufe weiterverwendet wird. Produkte der Gegenstrom-Extraktionsstufe sind die gereinigte Erde und eine saure Flüssigkeit, die die Schwermetalle in gelöster Form enthält.

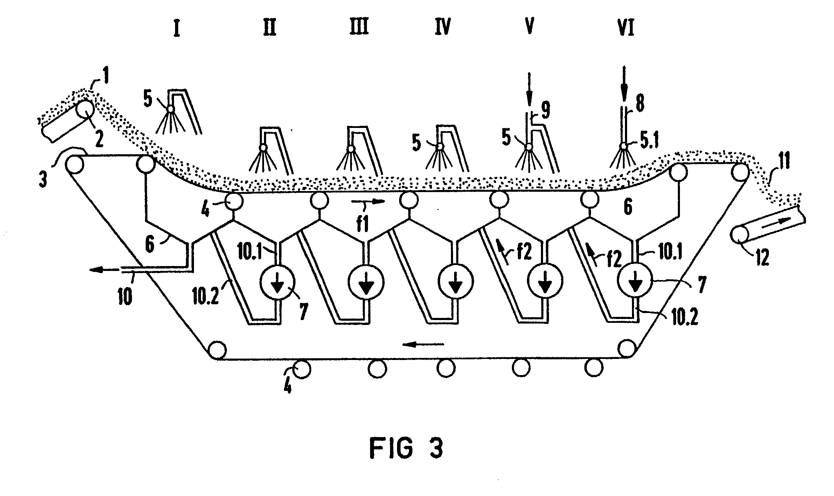

Zur Erläuterung des Verfahrens im einzelnen sei zunächst auf die Gegenstrom-Extraktionsvorrichtung nach FIG 3 eingegangen. Die schwermetallkontaminierte Erde 1 wird über ein Förderband 2 dem Bandfilter 3 zugeführt. Das Bandfilter 3 wird über Stützrollen 4 im Kreis geführt. Der motorische Antrieb ist nicht eingezeichnet. Durch eine Vielzahl von Sprühdüsen 5 in mehreren Stufen I bis V wird die Erde in engen Kontakt zu dem Extraktionsmittel gebracht, das durch die Rohrleitung 9 zugeführt und mit dem aus der Rohrleitung 8 stammenden Waschwasser gemischt wird. Als Extraktionsmittel kommt z.B. Salzsäure HCl in Betracht. In jeder Stufe I bis V wird nach dem Einwirken auf die Erde die Flüssigkeit mittels Trichter 6 aufgefangen und über Pumpen 7 der jeweils vorhergehenden Stufe zugeführt. In der bezogen auf die Erde ersten Stufe I und bezogen auf die Flüssigkeit letzten Stufe wird die mit Schwermetallen stark angereicherte Säure über die Rohrleitung 10 abgezogen. Die durch die Säurebehandlung von Schwermetallen weitgehend befreite Erde 11 wird nach dem Auswaschen der Säure mittels Waschwasser innerhalb der Stufe VI über ein Förderband 12 ausgetragen. Die Vorrichtung nach FIG 3 weist mithin die folgenden strukturellen bzw. konstruktiven Merkmale auf:

- Ein umlaufendes Bandfilter 3 ist über Stützrollen 4 im Kreis geführt, wobei zumindest ein Teil der Stützrollen 4 als Antriebsrollen mit motorischem Antrieb ausgebildet ist.
- Auf der Eintragsseite des Bandfilters 3 ist ein Förderband 2 für die kontaminierte Erde 1 mit seiner Austragsseite mündend angeordnet.
- In Förderrichtung $f_1$ der auf dem Bandfilter 3 verteilten Erde 1 gesehen folgt eine Mehrzahl von Säurebehandlungsstationen I bis V aufeinander. Jede davon ist ausgerüstet mit mindestens einem oberhalb des Bandfilters angeordneten Sprühdüsenkopf 5 für die Säure, einer an den Sprühdüsenkopf 5 jeweils angeschlossenen Säurezufuhrleitung und - unterhalb des Bandfilters 3 - mit Auffangtrichtern 6 für die durch die Erde 1 und das Bandfilter 3 nach unten tropfenden sauren Schwermetall-Lösung. Dabei sind die Auffangtrichter 6 über entsprechende Rohrleitungen 10.1 an die Saugseite von Förderpumpen 7 angeschlossen, deren Druckleitungen 10.2 jeweils Säurezufuhrleitungen für die vorhergehende Säurebehandlungsstation bilden. Die vom Auffangtrichter 6 der ersten Säurebehandlungsstation I abgehende Rohrleitung 10 bildet die Austragleitung für die mit dem höchsten Gehalt an Schwermetallen beladene Säure.

- An die in Bandförderrichtung $f_1$ gesehen letzte Säurebehandlungsstation schließt sich eine Spülstation VI an. Diese weist einen oberhalb des Bandfilters 3 angeordneten Sprühdüsenkopf 5.1 auf und eine daran angeschlossene Spülwasserzufuhrleitung 8.
- Ein unterhalb des Bandfilters 3 angeordneter Auffangtrichter 6 der Spülstation VI ist mit einer Förderpumpe 7 sowie Saug- und Druckleitungen 10.1,10.2 zur Rückführung des Säure- und schwermetall-beladenen Spülwassers zum Sprühdüsenkopf 5 der vorhergehenden Säurebehandlungsstation versehen.

In Verbindung mit FIG 3 kann nun die Verfahrensstufe B nach FIG 2 erläutert werden: Die zu reinigende Erde 1 durchläuft auf dem flüssigkeitsdurchlässigen, aber Partikel undurchlässigen Förderband in Form eines Bandfilters 3 nacheinander mehrere Säurebehandlungsstationen I bis V. In FIG 2, Teil B ist aus Platzgründen die Behandlungsstation II weggelassen. Innerhalb dieser Säurebehandlungsstationen I bis V wird jeweils nach dem Verfahren der Gegenstrom-Extraktion die durchlaufende Erdportion von der Säure, z.B. 30 %ige Salzsäure HCl durchtränkt. Dabei werden die in der Erdportion enthaltenen Schwermetalle von der Säure weitgehend aufgelöst, wobei die Schwermetall-Lösung von den unterhalb des Förderbandes bzw. Bandfilters 3 angeordneten Auffangbehältern 6 aufgefangen und im Gegenstrom zur Förderrichtung $f_1$ der Erde 1 in die jeweils vorhergehende Säurebehandlungsstation eingespeist wird bzw. dem Auffangbehälter 6 der ersten Säurebehandlungsstation I zur Weiterverarbeitung entnommen wird. Dabei wird innerhalb oder benachbart zur letzten Säurebehandlungsstation V die saure Schwermetall-Lösung aus den Erdportionen mittels Spülwassers W ausgetrieben. Nach dieser Säurewäsche (Stufe VI) wird dann die gereinigte Erde durch den Auslaßstutzen b3 nach unten ausgetragen. Mit b1 und b2 sind die Zufuhrstutzen für Säure bzw. Wasser bezeichnet, welche in den Behandlungsraum durch die Deckwand eines bei b4 schematisch angedeuteten Gehäuses münden. Innerhalb der Behandlungsstufen V und VI wird das Spül- bzw. Waschwasser W, mit welchem die säure-behandelten Erdportionen zum Austreiben der Säure gespült werden, mit der Säure der vorhergehenden Behandlungsstation V versetzt und so den durch die vorhergehende Behandlungsstation V durchlaufenden Erdportionen zugeführt. Als Schwermetall-Lösungsmittel wird vorteilhafter Weise, wie bereits angedeutet, technische Salzsäure verwendet.

## Stufe C:

Hydroxidfällung und Entwässerung

Die Fällung der Schwermetalle aus der sauren Lösung erfolgt durch die Zugabe von Lauge, bevorzugt von Kalkmilch. Die entstehenden eisenhydroxidhaltigen Schwermetallhydroxide sind schwer zu entwässern. Die Entwässerung kann beispielsweise mittels Plattenabscheidern und Kammerfilterpressen erfolgen, als bevorzugte Technik wird hier aber die magnetische Entwässerung eingesetzt. Dabei kann die Zusammenführung von schwermetallhaltiger Säure und Lauge im für die Flocculation vorgesehenen Volumen der magnetischen Entwässerungsanlage erfolgen.

Die schwermetallhaltige saure Lösung gelangt nach der Verfahrensstufe B aus der entsprechenden Behandlungsstation über einen Transferkanal b5 zur magnetischen Entwässerungsstation c1, deren Gehäuse wieder schematisch als Rechteck bei c2 angedeutet ist, mit einem Laugen-Zufuhrstutzen c3 an der Gehäuseoberseite und mit einem Abfuhrstutzen c4 für das Schwermetallkonzentrat IIC (das Schwermetall-Konzentrat IA wurde durch den Stutzen $a_A$ der Behandlungsstufe A abgeführt). Innerhalb der Verfahrensstufe bzw. Behandlungsstation C wird der die gefällten Schwermetalle enthaltenden Schlamm c5, welcher durch Mischung der Schwermetall-Lösung und der Lauge entstanden ist, bevorzugt kontinuierlich einer Sedimentationszone c6 zugeführt, innerhalb welcher auf ihn außer den Gravitationskräften die magnetischen Kräfte eines starken Gradienten-Magnetfeldes c7 einwirken, so daß die im Schlamm c5 enthaltenen magnetisierbaren Partikel in Richtung steigender magnetischer Feldstärke getrieben und zu einem Sedimentkuchen c8 verdichtet werden, welcher über eine Austragzone c9 aus dem Bereich des Gradienten-Magnetfeldes c7 heraus nach außen gefördert wird. Im einzelnen erkennt man, daß das Gemisch aus Schwermetall-Lösung und Lauge über die schema tisch angedeutete Rohrleitung c10 von unten und zentral über entsprechende Leitvorrichtungen in die Sedimentationszone c6 geleitet wird. Die zentrale Zufuhrzone wird konzentrisch und koaxial umfaßt von mehreren, hier drei, Magnetspulen c11, die insbesondere zu supraleitenden Magneten gehören können. Im einzelnen ist dieses Entwässerungsverfahren zusammen mit einer geeigneten Durchführungs-Einrichtung anhand zweier weiterer Ausführungsbeispiele erläutert.

Durch den Stutzen c4 gelangt der entwässerte Schwermetallkuchen nach außen, über den Transferkanal c12 fließt das sich im oberen Bereich der Sedimentationszone c6 absetzende Salzwasser mit Gefälle in die Verfahrensstufe bzw. Behandlungsstation D, wo eine Entsalzung mittels umgekehrter Osmose durchgeführt wird.

## Stufe D:

Entsalzung des Abwassers

An Sanierungsorten, bei denen keine Einleitungsmöglichkeit für salzhaltige Abwässer gegeben sind, ist eine Entsalzung des Abwassers vorgesehen. Hierfür bietet sich das Verfahren der umgekehrten Osmose mittels Membranen an. Die Aufkonzentrierung des Salzes soll dabei so hoch sein, daß sich ein Einsatz des Salzkonzentrats als Auftaumittel lohnt. Außerdem wird der Salzgehalt im Abwasser so weit verringert, daß dieses entsalzte Wasser zur Spülung der Erde in der Prozeßstufe Gegenstrom-Extraktion und zur nassen magnetischen Vorreinigung verwendet werden kann. Damit ist ein nahezu geschlossener Wasserkreislauf möglich, so daß für das Gesamtverfahren kein zusätzliches Wasser benötigt wird. Der Wassereintrag durch die anfänglich feuchte Erde und durch die Säure und die Lauge ist dann gleich dem Wasseraustrag durch die gereinigte Erde, die Schwermetallkonzentrate und das Salzkonzentrat.

Im einzelnen ist mit d1 die Entsalzungsstation als Ganzes bezeichnet, mit d2 ihr Abfuhrstutzen am Gehäuseboden für das Salzkonzentrat, mit d3 die Membraneinrichtung im Inneren des Gehäuses d11 zur Durchführung der Osmose, an welcher eine Leitung d4 mit Pumpe d41 eingangsseitig angeschlossen ist, wobei auf der Druckseite der Pumpe d41 noch mittels Leitung d5 und Pumpe d51 eine Rückspeisung des Salzkonzentrats erfolgt. Diagonal-gestrichelt ist eine Membran d31 symbolisiert; d6 ist der Abfuhrstutzen für das entsalzte Abwasser.

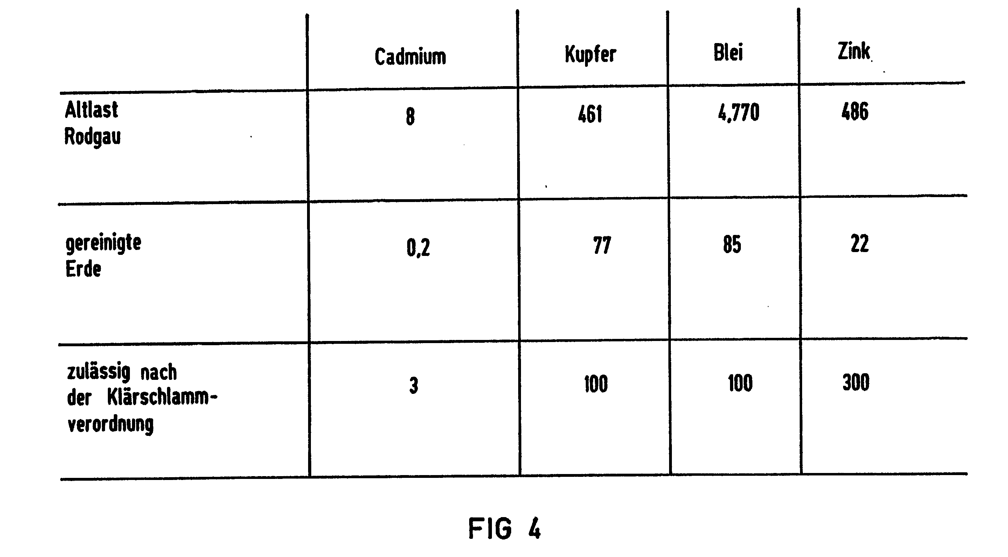

Im Labormaßstab wurde die Extraktion der Schwermetalle mittels Salzsäure anschließend an die magnetische Vorreinigung (A) für die einzelnen Fraktionen getrennt durchgeführt. Zusammen mit der magnetischen Vorreinigung wurden 98% des Bleis und des Cadmiums, 83% des Kupfers und 95% des Zinks extrahiert. Dadurch wurden für alle Schwermetalle die Bodengrenzwerte nach der Klärschlammverordnung unterschritten. Die Zahlenwerte sind in FIG 4 zusammengefaßt dargestellt.

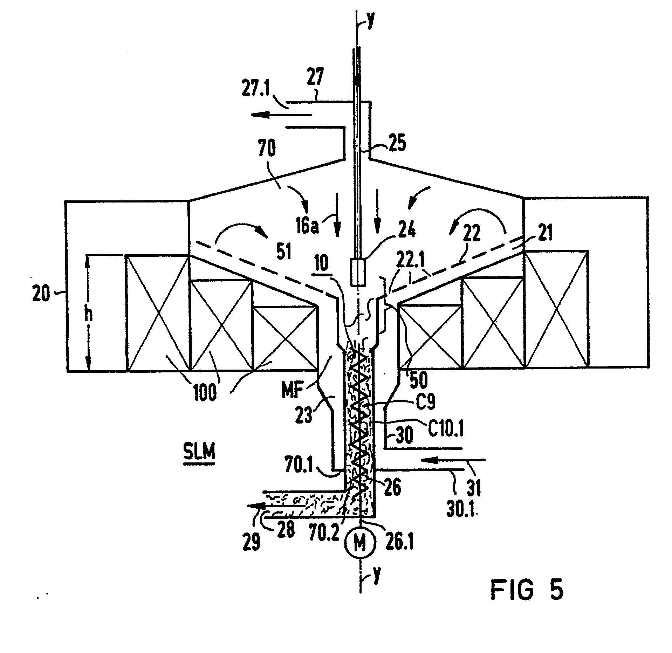

FIG 5 zeigt ein zweites Ausführungsbeispiel zur Durchführung der Verfahrensstufe C, wie sie für den kontinuierlichen kommerziellen Betrieb geeignet ist. Das magnetische Gradientenfeld wird hier von mehreren supraleitenden Ringspulen 100, im vorliegenden Falle drei konzentrische Ringspulen unterschiedlicher Höhe h, erzeugt. Die supraleitenden Spulen sind in einen Kryostaten 20 eingebaut, der sich im Zentrum kegelförmig erweitert und so ein großes Nutzvolumen des Gradientenfeldes ermöglicht. Die Sedimentationskammer in Form eines Behälters 70 folgt der Form des Kryostaten 20 und ist über das nutzbare Gradientenfeld ausgedehnt. Die Suspension oder der zu entwässernde Schlamm werden hier von unten durch das Zentralfeld des Magneten geführt, um im starken annähernd homogenen Magnetfeld MF die Flocculation zu nutzen. Weiter stromaufwärts wird die Suspension über einen Ringkanal 21, dessen obere kegelförmige Kanalwand 22 mit Durchlaßbohrungen 22.1 versehen ist, der Sedimentationskammer 51 zugeführt.

Zur Lockerung der Partikel-Wasser-Bindung ist von oben axial ein Ultraschallkopf 24, befestigt an einem entsprechenden Halterohr 25, eingebaut. Das Konzentrat wird über eine mechanische Fördereinrichtung, im vorliegenden Falle über eine Förderschnecke 26 nach unten aus der eigentlichen Austragszone C9 über die Leitung 28 abgezogen. Das weitgehend gereinigte Wasser wird über eine oben zentral mit dem Sedimentationsbehälter 70 verbundene Rohrleitung 27 nach oben abgeführt, wobei diese Rohrleitung 27 vom Halterohr 25 des Ultraschallkopfes 24 durchdrungen ist.

Man erkennt aus FIG 5, daß der Behälter 70 für die eigentliche Sedimentation und eine diesem strömungsmäßig vorgeschaltete Zufuhrkammer 23 von wenigstens einer Magnetspule 100 eines supraleitenden Magneten SLM umschlungen ist, wobei die Spulenachse y-y in oder parallel zur Richtung 16a der Sedimentation verläuft. Der Behälter 70 ist mit seinem unteren Teil 70.1 innerhalb seiner Austragszone C9 und die Behälterwand ist mit ihrer Austragöffnung 70.2 benachbart zum Kopf des sich jeweils ausbildenden, schematisch angedeuteten Sedimentkuchens C10 von der Förderschnecke 26 durchdrungen, welche auf einer Schneckenwelle 26.1 sitzt. Die Schneckenwelle 26.1 durchdringt den Leitungsteil 28 der Austragleitung und steht mit einem Motor M in Antriebsverbindung. Die normalerweise pastösen Kuchenteile C10.1, die von der Förderschnecke 26 bereits aus der Kernzone 50 des Kuchens C10 herausgefördert sind, sind zeitlich vor dem Sedimentkuchen C10 entstanden und werden im Zuge einer kontinuierlichen Sedimentation laufend von der Förderschnecke 26 in Pfeilrichtung 29 durch die Austragleitung 28 herausbefördert. Oberhalb der Sedimentationszone 51 ist, wie erwähnt, die Abzugsleitung 27 mit einer Abzugsöffnung 27.1 vorgesehen. Die Suspension oder partikelbeladene Flüssigkeit wird durch eine konzentrisch und koaxial zur Austragsleitung 28 den unteren schlanken Teil 70.1 des Behälters 70 umgebende Zuführleitung 30 der konischen Ringzone 21 zugeführt, wobei ein radialer Leitungsstutzen C30.1 an den konzentrischen Leitungsteil 30 angeschlossen ist.

Gemäß FIG 5 sind zur Erzielung eines in Sedimentationsrichtung 16a gestaffelten Gradientenfeldes mehrere supraleitende Magnetspulen 100, im vorliegenden Falle drei, konzentrisch zueinander und koaxial zur Achse der Austragszone C9 mit nach außen sich vergrößernder Spulenhöhe angeordnet, so daß sich oberhalb der bzw. angrenzend zur Austragszone 230 ein konisch sich erweiternder Zufuhrkammerteil 23 für die partikelbeladene Flüssigkeit ergibt. Anstelle der Staffelung der Höhenabmessungen h der einzelnen Magnetspulen könnten diese bei in etwa gleicher Höhe auch gegeneinander versetzt angeordnet sein.

Man erkennt aus FIG 5 ferner, daß die Suspension gemäß Pfeilrichtung 31 im Gegenstrom zur Austragrichtung des Konzentrats bzw. des Sedimentkuchens (Pfeil 29) zugeführt wird. Die bodenseitige Kanalwand 22, z.B. ausgeführt als Lochblech, stellt eine Fortsetzung des schlanken Behälterteiles 70.1 dar, während der Bodenteil der Zufuhrkammer 23 seine Fortsetzung in der (äußeren) Zufuhrleitung 30 findet, so daß also der schlanke Behälterteil 70.1 und die Zufuhrleitung 30 eine koaxiale Doppelleitung bilden. Die Zufuhrkammer 23 ist im Bereich der höchsten magnetischen Feldstärke angeordnet mit dem Ziel, die einströmenden Partikel unter der Wirkung der magnetischen Kräfte zusammenzulagern (Flocculation).

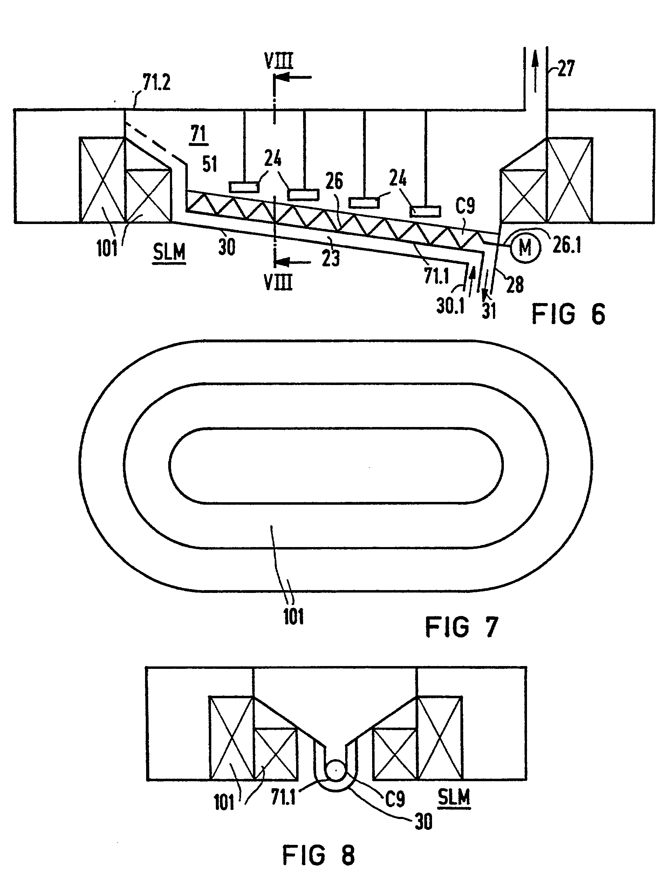

Beim dritten Ausführungsbeispiel nach FIG 6 bis 8 sind die Magnetspulen 101 des supraleitenden Magneten SLM nach Art eines langgestreckten O ausgebildete Dipolmagnetspulen (siehe FIG 7), welche einen im Querschnitt entsprechend wannenförmigen Behälter 71 für die Sedimentationskammer und ihre Austragszone C9 umgeben. Der schlankere untere Behälterteil 71.1, welcher die Austragszone C9 aufnimmt, ist rinnenförmig. Der gesamte Behälter verläuft, wie in FIG 4 dargestellt, zu einer Seite in Wannenlängsrichtung geneigt. Der Austragstutzen 28 für das Konzentrat und der Zufuhrstutzen 30.1 für die partikelbeladene Flüssigkeit bzw. die Suspension sind an den Behälter 71 im Bereich der geodätisch tiefsten Behälterbodenzone, voneinander separiert, angeschlossen. Auch hier wäre wie im Beispiel nach FIG 5 eine zueinander konzentrische Leitungsführung der Anschlußstutzen möglich. Die Förderschnecke 26 verläuft mit ihrer Welle 26.1 nicht vertikal nach unten, sondern entsprechend der geneigten Rinne 71.1. Mit 24 sind wieder Ultraschallköpfe, in diesem Falle vier über die Länge der Verdichtungszone verteilte, bezeichnet, welche an einer Deckwand 71.2 des Behälters 71 befestigt sind. Von dieser Deckwand geht auch nach oben ein Leitungsstutzen 27 für die Abfuhr gereinigten Wassers ab. Dieses Beispiel nach FIG 6 bis 8 hat den besonderen Vorteil, daß die zugeführte Suspension (Pfeil 31) auf einem relativ langen Strömungsweg und während entsprechender Strömungszeiten einem starken, weitgehend homogenen Magnetfeld ausgesetzt ist, so daß sich schon eine effektive Flocculation ausbilden kann, bis die Suspension zum Sedimentationsbeginn dann dem magnetischen Gradientenfeld unterworfen wird.

Eine bevorzugte Anwendung der Verfahrensstufe C bezieht sich auf die Sedimentation von Eisenhydroxid oder eisenoxidhaltigen Schwermetallhydroxiden. Hierbei können sehr gute Verdichtungs- und Reinigungsgrade erzielt werden, ohne daß jedoch die Anwendung des erfindungsgemäßen Verfahrens auf die Sedimentation von Suspensionen mit derartigen magnetisierbaren Partikeln beschränkt wäre.

**Patentansprüche**

1. Verfahren zur Extraktion von Schwermetallen aus belasteten Böden, wobei die zu reinigende Erde einer Aufteilung in grob- bis feinkörnige Erdpartikel-Fraktionen unterworfen wird und die feinkörnige Erdpartikel-Fraktion eine mehrstufige Schwermetall-Extraktionsstation durchläuft, wo sie mit einer Extraktionslösung aus Wasser und Schwermetall lösenden Chemikalien durchtränkt wird, die behandelte Erdpartikel-Fraktion gespült und ausgetragen und die Extraktionlösung nach mehrmaliger Verwendung, beladen mit den gelösten Schwermetallen, einer Weiterverarbeitung zugeführt wird, gekennzeichnet durch die folgenden Schritte:

a) nach einer magnetischen Vorreinigung wird die Magnetscheidung des ferro- oder stark paramagnetischen Anteils der jeweiligen Fraktion durchgeführt, wobei die Magnetscheider an die Korngrößen der Erdpartikel-Fraktionen angepaßt werden;

b) die zu reinigende Erde (1) durchläuft auf einem flüssigkeitsdurchlässigen, aber partikel-undurchlässigen Förderband in Form eines Bandfilters (3) nacheinander mehrere Säurebehandlungsstationen (I-V), innerhalb welcher nach dem Verfahren der Gegenstrom-Extraktion jeweils die durchlaufende Erdportion von der Säure durchtränkt wird und die in ihr enthaltenen Schwermetalle von der Säure weitgehend aufgelöst werden, wobei die Schwermetall-Lösung von unterhalb des Förderbandes angeordneten Auffangbehältern (6) aufgefangen und im Gegenstrom zur Förderrichtung ($f_1$) der Erde in die jeweils vorhergehende Säurebehandlungsstation eingespeist bzw. dem Auffangbehälter (6) der ersten Säurebehandlungsstation (I) zur Weiterverarbeitung entnommen wird und wobei innerhalb der oder benachbart zur letzten Säurebehandlungsstation (V) die saure Schwermetall-Lösung aus den Erdportionen mittels Spülwassers (W) ausgetrieben und nach dieser Säurewäsche die gereinigte Erde entnommen wird;

c) sodann werden die Fällung der Schwermetalle aus der sauren Schwermetall-Lösung durch Zugabe von Lauge und anschließend die Entwässerung der Salzlösung in einer Entwässerungsstation (C1) durchgeführt, wobei zum einen das sedimentierte entwässerte Schwermetall-Konzentrat (IIC) und zum anderen das übrig bleibende Salzwasser, gegebenenfalls zur Weiterverarbeitung, an je einem Auslaß (C4, C12) ausgetragen werden, wobei die Entwässerung auf magnetischem Wege durchgeführt wird, in dem der die gefällten Schwermetalle enthaltende Schlamm (C5), bevorzugt kontinuierlich, einer Sedimentationszone (C6) zugeführt wird, innerhalb welcher auf ihn außer den Gravitationskräften die magnetischen Kräfte eines starken Gradienten-Magnetfeldes (C7) einwirken, so daß die im Schlamm enthaltenen magnetisierbaren Partikel in Richtung steigender magnetischen Feldstärke getrieben und zu einem Sedimentkuchen (C8) verdichtet werden, welcher über eine Austragzone (C9) aus dem Bereich des Gradienten-Magnetfeldes heraus nach außen gefördert wird.

2. Verfahren nach Anspruch 1, **dadurch gekennzeichnet**, daß die Magnetscheidung im Naßverfahren durchgeführt wird.

3. Verfahren nach Anspruch 1 oder 2, **dadurch gekennzeichnet**, daß das Spül- bzw. Waschwasser (W), mit welchem die säurebehandelten Erdportionen zum Austreiben der Säure gespült werden, mit der Säure der vorhergehenden Behandlungsstation (en) (V bzw. I-V) versetzt und so den durch die vorhergehenden Behandlungsstationen (I-V) durchlaufenden Erdportionen zugeführt wird.

4. Verfahren nach einem der Ansprüche 1 bis 3, **dadurch gekennzeichnet**, daß als Schwermetall-Lösungsmittel technische Salzsäure verwendet wird.

5. Verfahren nach einem der Ansprüche 1 bis 4, **dadurch gekennzeichnet**, daß zur Fällung der Schwermetalle aus der sauren Schwermetall-Lösung Kalkmilch $Ca(OH)_2$ verwendet wird.

6. Verfahren nach einem der Ansprüche 1 bis 5, **dadurch gekennzeichnet**, daß das am Ausgang der Entwässerungsstation anfallende Salzwasser, z.B. nach dem Verfahren der umgekehrten Osmose mittels Membranen, entsalzt wird, wobei der Salzgehalt in der aufkonzentrierten Fraktion oberhalb eines Minimalwertes eingestellt wird, der die Verwendung der Fraktion als Auftaumittel gestattet.

7. Verfahren nach Anspruch 6, **dadurch gekennzeichnet**, daß der Salzgehalt im entsalzten Abwasser unterhalb eines niedrigen Maximalwertes eingestellt wird, der die Verwendung des Abwassers zur Spülung der Erdportionen in der Prozeßstufe (B) der Gegenstrom-Extraktion und in der Prozeßstufe (A) der nassen magnetischen Vorreinigung gestattet.

8. Vorrichtung zur Gegenstrom-Extraktion der Schwermetalle aus zu reinigenden, Schwermetallkontaminierten Erden bei einem Verfahren nach Anspruch 1, **dadurch gekennzeichnet**, daß zur Durchführung einer Gegenstrom-Extraktion

– ein umlaufendes Bandfilter (3) über Stützrollen (4) im Kreis geführt ist, wobei zumindest ein Teil der Stützrollen (4) als Antriebsrollen mit motorischem Antrieb ausgebildet ist;

– daß auf der Eintragseite des Bandfilters (3) ein Förderband (2) für die kontaminierte Erde (1) mit seiner Austragseite mündend angeordnet ist;

– daß in Förderrichtung ($f_1$) der auf dem Bandfilter (3) verteilten Erde (1) gesehen eine Mehrzahl von Säurebehandlungsstationen (I-V) aufeinanderfolgen, jede davon ausgerüstet mit mindestens einem Sprühdüsenkopf für die Säure oberhalb des Bandfilters (3), einer an den Sprühdüsenkopf (5) angeschlossenen Säurezufuhrleitung (9) und, unterhalb des Bandfilters (3), mit Auffangtrichtern (6) für die durch die Erde (1) und das Bandfilter (3) nach unten tropfende saure Schwermetall-Lösung, wobei die Auffangtrichter (6) über entsprechende Rohrleitungen (10.1) an die Saugseite von Förderpumpen (7) angeschlossen sind, deren Druckleitungen (10.2) jeweils Säurezufuhrleitungen für die vorhergehende Säurebehandlungsstation bilden, und wobei die vom Auffangtrichter (6) der ersten Säurebehandlungsstation (I) abgehende Rohrleitung (10) die Austragleitung für die mit dem höchsten Gehalt an Schwermetallen beladene Säure bildet, und daß zum Zwecke der Sedimentation und Schwermetall-Aufkonzentrierung der neutralisierten Extraktionslösung

– ein Behälter (70; 71) für die Sedimentationskammer und eine dieser strömungsmäßig vorgeschaltete Zufuhrkammer (23) von wenigstens einer Magnetspule (100, 101) eines supraleitenden Magneten (SLM) umschlungen ist, wobei die Spulenachse (y-y) in oder parallel zur Richtung (16a) der Sedimentation verläuft,

– daß der Behälter (70; 71) innerhalb seiner Austragszone (C9) und die Behälterwand mit ihrer Austragsöffnung (70.2) benachbart zum Kopf des sich ausbildenden Sedimentkuchens (10) von dem länglichen Förderorgan (26) einer Fördereinrichtung durchdrungen ist;

–daß oberhaib der Sedimentationszone (51) wenigstens eine Abzugsöffnung (27.1) für die vorgereinigte Flüssigkeit in der Behälterwand vorgesehen ist

– und daß die partikelbeladene Flüssigkeit durch wenigstens eine auf einer der Abzugsöffnung (27.1) abgelegenen Seite der Sedimentationszone (51) angeordnete Zufuhröffnung (Leitung 30, 30.1) in der Behälterwand der Sedimentationszone (51) zuführbar ist.

9. Vorrichtung nach Anspruch 8, **dadurch gekennzeichnet**, daß an die in Bandförderrichtung (f₁) gesehen letzte Säurebehandlungsstation (V) sich eine Spülstation (VI) anschließt, mit Sprühdüsenkopf (5.1) oberhalb des Band (8), und daß ein unterhalb des Bandfilters (3) angeordneter Auffangtrichter (6) dieser Spülstation (VI) mit Förderpumpe (7) sowie Saug-und Druckleitung (10.1, 10.2) zu Rückführung des säure- und schwermetall-beladenen Spülwassers zum Sprühdüsenkopf (5) der vorhergehenden Säurebehandlungsstation (V) vorgesehen ist.

## Claims

1. Process for the extraction of heavy metals from loaded soils, whereby the earth to be cleaned is subjected to a division into coarse-grained to finegrained earth-particle-fractions and the finegrained earth-particle-fraction passes through a multistage heavy metal extraction station, where it is saturated with an extraction solution of water and chemicals which dissolve heavy metal, the treated earthparticle-fraction is rinsed and discharged and after repeated use, the extraction solution, loaded with the dissolved heavy metals, is supplied to a further processing stage, characterized by the following steps:

a) after a magnetic preliminary cleaning, the magnetic separation of the ferromagnetic or strongly paramagnetic part of the respective fraction is carried out, whereby the magnetic separators are adapted to the grain sizes of the earth-particle-fractions;

b) the earth (1) to be cleaned passes successively through several acid treatment stations (I–V) on a conveyer belt in the form of a band filter (3) which is permeable with regard to fluid but not with regard to particles, within which stations, according to the process of the counterflow extraction, the earth portion passing through is saturated by the acid and the heavy metals contained therein are largely dissolved by the acid, whereby the heavy metal solution is collected by collecting vessels (6) arranged beneath the conveyer belt and, in the counterflow to the conveying direction (f₁) of the earth, is fed into the respectively preceding acid treatment station or is removed from the collecting vessel (6) of the first acid treatment station (I) for further processing, and whereby within or adjacent to the last acid treatment station (V) the acid heavy metal solution is expelled from the earth portions by means of rinsing water (W) and after this acid wash the cleaned earth is removed;

c) after that the precipitating of the heavy metals from the acid heavy metal solution is carried out with the addition of electrolyte and subsequently the draining of the salt solution is carried out in a draining station (C1), whereby for one thing the deposited drained heavy metal concentrate (IIC) and for another thing the remaining salt water, if necessary for further processing, are discharged at an outlet (C4, C12) respectively, whereby the draining is carried out on a magnetic path, in which the sediment (C5) containing the precipitated heavy metals is supplied, preferably continuously, to a sedimentation zone (C6), within which, apart from the gravitation forces, the magnetic forces of a strong gradient magnetic field (C7) act on it, with the result that the magnetizable particles contained in the sediment are driven in the direction of increasing magnetic field strength and are compressed into a sediment cake (C8), which is conveyed by means of a discharge zone (C9) out of the region of the gradient magnetic field to the outside.

2. Process according to claim 1, characterized in that the magnetic separation is carried out in the wet process.

3. Process according to claim 1 or 2, characterized in that the rinsing or washing water (W), with which the acid-treated earth portions are rinsed for the stripping of the acid, is displaced with the acid of the preceding treatment station(s) (V or I–V) and thus is supplied to the earth portions passing through the preceding treatment stations (I–V).

4. Process according to one of claims 1 to 3, characterized in that commercial hydrochloric acid is used as heavy metal solvent.

5. Process according to one of claims 1 to 4, characterized in that lime water $Ca(OH)_2$ is used for the precipitating of the heavy metals from the acid heavy metal solution.

6. Process according to one of claims 1 to 5, characterized in that the salt water resulting at the output of the draining station is desalted, e.g. according to the process of reverse osmosis by means of membranes, whereby the salt content in the concentrated fraction is adjusted above a minimal value which allows the use of the fraction as thawing means.

7. Process according to claim 6, characterized in that the salt content in the desalted waste water is adjusted below a low maximum value which allows the use of the waste water for the rinsing of the earth portions in the process stage (B) of the counterflow extraction and in the process stage (A) of the wet magnetic preliminary cleaning.

8. Device for the counterflow extraction of the heavy metals from earth to be cleaned which is contaminated with heavy metal, by a process according to claim 1, characterized in that to carry out a counterflow extraction – a circulating band filter (3) is conducted by means of supporting rollers (4) in the circuit, whereby at least one part of the supporting rollers (4) is constructed as driving rollers with motor drive;

– a conveyer belt (2) for the contaminated earth (1) is arranged with its discharge side opening out on the feed side of the band filter (3);

– seen in the conveying direction ($f_1$) of the earth (1) distributed on the band filter (3), a plurality of acid treatment stations (I–V) follow successively, each of which is equipped with at least one spraying nozzle head for the acid above the band filter (3), an acid supply line (9) attached to the spraying nozzle head (5) and, beneath the band filter (3), with collecting cones (6) for the acid heavy metal solution dripping downwards through the earth (1) and the band filter (3), whereby the collecting cones (6) are attached by means of corresponding pipelines (10.1) to the suction side of conveying pumps (7), the pressure lines (10.2) of which form acid supply lines for the preceding acid treatment station respectively, and whereby the pipeline (10) leaving the collecting cone (6) of the first acid treatment station (I) forms the discharge line for the acid loaded with the highest content of heavy metals, and in that for the purpose of the sedimentation and heavy metal concentration of the neutralized extraction solution

– a container (70; 71) for the sedimentation chamber and a supply chamber (23), series-connected to this with regard to flow, has at least one magnetic coil (100, 101) of a superconducting magnet (SLM) wound around it, whereby the coil axis (y–y) extends in or parallel to the direction (16a) of the sedimentation,

– the container (70; 71) within its discharge zone (C9) and the container wall with its discharge opening (70.2) adjacent to the head of the forming sediment cake (10) is penetrated by the elongated conveying organ (26) of a conveying apparatus;

– above the sedimentation zone (51) at least one draining opening (27.1) for the pre-cleaned fluid is provided in the container wal

– and the particle-loaded fluid can be supplied through at least one supply opening (line 30, 30.1), arranged on a side of the sedimentation zone (51) remote from the draining opening (27.1), in the container wall of the sedimentation zone (51).

9. Device according to claim 8, characterized in that a rinsing station (VI) is connected to the last acid treatment station (V), seen in belt conveying direction ($f_1$), with spraying nozzle head (5.1) above the belt [sic] (8), and in that a collecting cone (6) of this rinsing station (VI) arranged beneath the band filter (3) is provided, with conveying pump (7) and suction and pressure line (10.1, 10.2) for the return of the acid- and heavy-metal-loaded rinsing water to the spraying nozzle head (5) of the preceding acid treatment station (V).

## Revendications

1. Procédé d'extraction de métaux lourds de sols pollués, en subdivisant la terre à épurer en fractions de particules de terre allant d'une fraction à grains grossiers à une fraction à grains fins, et en faisant passer la fraction de particules de terre à grains fins dans un poste d'extraction des métaux lourds à plusieurs étages, où la terre à épurer est imprégnée d'une solution d'extraction constituée d'eau et de produits chimiques dissolvant les métaux lourds, en lavant la fraction de particules de terre qui a été traitée, et en la déchargeant et en envoyant, après l'avoir utilisée plusieurs fois, la solution d'extraction chargée des métaux lourds dissous, à un traitement ultérieur, caractérisé par les stades suivants:

a) après une préépuration magnétique, on effectue la séparation magnétique de la partie ferromagnétique ou très paramagnétique de chaque fraction, les séparateurs magnétiques étant adaptés à la granulométrie des fractions de particules de terre;

b) on fait passer la terre à épurer (1) sur une bande convoyeuse ayant la forme d'un filtre à bande (3), perméable aux liquides mais imperméable aux particules, successivement dans plusieurs postes de traitement à l'acide (I à V), dans lesquels la partie terreuse qui y passe est imprégnée d'acide par le procédé d'extraction à contrecourant, et les métaux lourds qui y sont contenus sont, dans une grande mesure, dissous par l'acide, la solution de métaux lourds étant recueillie par des récipients de réception (6) disposés en-dessous de la bande convoyeuse et envoyée, à contre-courant du sens de transport ($f_1$) de la terre, au poste précédent de traitement par un acide, ou étant prélevée du récipient de réception (6) du premier poste (I) de traitement par un acide pour être traitée ultérieurement, la solution acide de métaux lourds étant, dans le dernier poste (V) de traitement par un acide ou à proximité de celui-ci, extraite des parties terreuses au moyen d'eau de lavage (W) et la terre épurée étant enlevée, après ce lavage acide;

c) on effectue ensuite la précipitation des métaux lourds dans la solution active de métaux lourds, par addition de lessive et, ensuite, la déshydration de la solution de sel dans un poste de déshydratation, le concentré de métaux lourds (IIC) sédimenté et déshydraté, d'une part, et l'eau salée restant, d'autre part, le cas échéant en vue d'être traitée ultérieurement, étant déchargés par des sorties (C4, C12), la déshydratation s'effectuant par voie magnétique en envoyant la boue (C5), contenant les métaux lourds précipités, de préférence en continu, à une zone de sédimentation (C6) dans laquelle, outre les forces de la gravité, les forces magnétiques exercent un champ magnétique à gradient (C7) intense de manière à pousser les particules magnétisables contenues dans la boue dans le sens des intensités magnétiques croissantes du champ, et à les tasser en un gâteau de sédiments (C8) qui, en passant par une zone de déchargement (C9), est transporté à l'extérieur de la région du champ magnétique à gradient.

2. Procédé suivant la revendication 1, caractérisé en ce qu'il consiste à effectuer la séparation magnétique par un procédé en voie humide.

3. Procédé suivant la revendication 1 ou 2, caractérisé en ce qu'il consiste à mélanger l'eau de rinçage ou de lavage (W), avec laquelle les parties terreuses traitées par un acide sont lavées pour extraire l'acide, à l'acide du (des) poste(s) de traitement précédents (V ou I à V), et à l'envoyer ainsi aux parties terreuses passant dans les postes de traitement (I à V) précédents.

4. Procédé suivant l'une des revendications 1 à 3, caractérisé en ce qu'il consiste à utiliser, comme solvant des métaux lourds, de l'acide chlorhydrique technique.

5. Procédé suivant l'une des revendications 1 à 4, caractérisé en ce qu'il consiste à utiliser du lait de chaux $Ca(OH)_2$ pour précipiter les métaux lourds dans la solution active de métaux lourds.

6. Procédé suivant l'une des revendications 1 à 5, caractérisé en ce qu'il consiste à déminéraliser l'eau salée se formant à la sortie du poste de déshydratation, par exemple par le procédé d'osmose inverse à l'aide de membranes, la teneur en sel de la fraction concentrée étant réglée au-dessus d'une valeur minimum qui permet d'utiliser la fraction comme agent anti-verglas.

7. Procédé suivant la revendication 6, caractérisé en ce qu'il consiste à régler la teneur en sel de l'eau résiduaire déminéralisée, en-dessous d'une valeur maximum basse qui permet d'utiliser l'eau résiduaire pour laver les parties terreuses au stade (B) du processus de l'extraction à contrecourant et au stade (A) du processus de la préépuration magnétique par voie humide.

8. Installation d'extraction à contre-courant des métaux lourds de terres polluées par des métaux lourds et à épurer, par un procédé suivant la revendication 1, caractérisée en ce que, pour effectuer une extraction à contre courant,

– un filtre à bande (3) sans fin passe en circuit fermé sur des rouleaux d'appui (4), au moins une partie des rouleaux d'appui (4) étant constituée en rouleaux moteurs à dispositif d'entraînement à moteur;

– le côté de déchargement d'une bande convoyeuse (2) pour la terre (1) polluée débouche du côté de l'entrée du filtre à bande (3);

– plusieurs postes de traitement par un acide (I à V) se succèdent dans le sens de transport ($f_1$) de la terre (1) répartie sur le filtre à bande (3), chacun d'entre eux étant muni au moins d'une tête à buse de projection pour l'acide, au-dessus du filtre à bande (3), d'un conduit d'amenée d'acide (9) raccordé à la tête de la buse de pro-jection (9) et, en-dessous du filtre à bande (3), d'enton-noirs de réception (6) de la solution acide de métaux lourds s'égouttant vers le bas, en passant à travers la terre (1) et le filtre à bande (3), les entonnoirs de réception (6) étant raccordés par des conduits (10.1) adé-quats au côté aspiration de pompes de circulation (7), dont les conduits de refoulement (10.2) forment des con-duits d'amenée de l'acide au poste précédent de traitement par un acide, le conduit (10) partant de l'entonnoir de réception (6) du premier poste de traitement par un acide (I) formant le conduit d'évacuation de l'acide chargé de la plus grande teneur en métaux lourds, et en ce que, pour la sédimentation et, pour la concentration des métaux lourds de la solution d'extraction neutralisée

– une cuve (70; 71) pour la chambre de sédimentation et une chambre d'admission (23) montée en amont de celle-ci est entourée d'au moins un enroulement magnétique (100, 101) d'un aimant supraconducteur (SLM) l'axe de l'enroulement (y–y) s'étendant dans la direction (16a) de la sédimentation ou parallèlement à cette direction,

– la cuve (70, 71) étant traversée, dans sa zone de déchargement (C9) et la paroi de la cuve, ayant son orifice de déchargement (70.2) à proximité du sommet du gâteau de sédiments (10) qui se forme, par l'organe de transport (26) oblong d'un dispositif de transport;

– au-dessus de la zone de sédimentation (51), est prévu, dans la paroi de la cuve, au moins un orifice d'évacuation (27.1) du liquide préépuré

– et le liquide chargé de particules peut être amené à la zone de sédimentation par au moins un orifice d'amenée (conduits 30, 30.1) ménagé dans la paroi de la cuve et disposé du côté de la zone de sédimentation (51) éloigné de l'orifice d'évacuation (27.1).

9. Installation suivant la revendication 8, caractérisée en ce qu'au dernier poste de traitement par un acide (V), considéré dans le sens de la bande convoyeuse ($f_1$), se raccorde un poste de lavage (VI), ayant une tête à buse de projection (5.1) au-dessus de la bande (8), et en ce qu'il est prévu de disposer en-dessous du filtre à bande (3) un entonnoir de réception (6) de ce poste de lavage (VI) à pompe de circulation (7), ainsi qu'un conduit d'aspiration et de refoulement (10.1, 10.2) pour retourner l'eau de lavage chargée d'acide et de métaux lourds à la tête à buse de projection (5) du poste de traitement précédent par un acide (V).

FIG 1

FIG 2

I II III IV V VI

FIG 3

| | Cadmium | Kupfer | Blei | Zink |
|---|---|---|---|---|
| Altlast Rodgau | 8 | 461 | 4,770 | 486 |
| gereinigte Erde | 0,2 | 77 | 85 | 22 |
| zulässig nach der Klärschlamm-verordnung | 3 | 100 | 100 | 300 |

FIG 4

EP 0 278 328 B1

EP 0 278 328 B1

FIG 5

FIG 6

FIG 7

FIG 8